(19) Europäisches Patentamt

European Patent Office

Office européen des brevets

(11) **EP 1 987 985 A1**

(12) **DEMANDE DE BREVET EUROPEEN**

(43) Date de publication:
**05.11.2008  Bulletin 2008/45**

(51) Int Cl.:
***B60Q 1/08*** *(2006.01)*

(21) Numéro de dépôt: **08155157.4**

(22) Date de dépôt: **25.04.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité:  **04.05.2007  FR 0703264**

(71) Demandeur: **VALEO VISION**
**93012 Bobigny (FR)**

(72) Inventeurs:
- **Fleury, Benoist**
  **94300 Vincennes (FR)**
- **Charpentier, Adrien**
  **75011 Paris (FR)**
- **Moizard, Julien**
  **75012 Paris (FR)**

(54) **Procédé de commande de l'orientation des projecteurs de véhicule**

(57)     L'invention concerne un procédé de commande automatique de lampes d'un véhicule, les lampes étant aptes à émettre un faisceau lumineux pour éclairer une route, le véhicule comportant une caméra vidéo, le procédé comportant les étapes consistant à :
- détecter la présence d'une paire de sources lumineuses à partir d'une image (1) acquise par la caméra ;
- calculer un angle projecteur ($\beta$) qui est défini par un angle de site de la paire de sources lumineuses dans un référentiel véhicule situé au niveau des lampes ; et
- ajuster l'orientation du faisceau lumineux des lampes en fonction dudit angle projecteur ($\beta$).

Selon l'invention, l'angle projecteur ($\beta$) est calculé à partir :
- soit d'un angle caméra ($\alpha 1$) qui est défini par un angle de site de la paire de sources lumineuses (S1-S2) dans un référentiel véhicule (VH1) situé au niveau de la caméra (Cam),
- soit d'un angle au sol ($\alpha 2$) qui est défini par un angle de site de la paire de sources lumineuses (S1-S2) dans un référentiel véhicule (VH1) situé à l'aplomb de la caméra (Cam).

**Fig. 1**

**Description**

**Domaine de l'invention**

La présente invention concerne un procédé de commande automatique de lampes d'un système d'éclairage d'un véhicule automobile, les lampes étant aptes à émettre un faisceau lumineux pour éclairer une route, le véhicule comportant une caméra vidéo de champ déterminé pour acquérir une image d'un environnement du véhicule se trouvant dans le champ de la caméra, le procédé comportant les étapes consistant à :

-    détecter la présence d'une paire de sources lumineuses à partir d'une image acquise par la caméra;
-    calculer un angle projecteur qui est défini par un angle de site de la paire de sources lumineuses dans un référentiel véhicule situé au niveau des lampes ; et
-    ajuster l'orientation du faisceau lumineux des lampes en fonction dudit angle projecteur.

La présente invention concerne également un dispositif pour la mise en oeuvre du procédé à cet effet.
Elle trouve une application particulière dans le domaine des véhicules automobiles.

**Etat de la technique**

Un procédé de commande automatique connu dans le document US 6 960 005 utilise une caméra vidéo visant vers l'avant du véhicule. La commande automatique des lampes du véhicule, ici les projecteurs, est fonction d'un angle déterminé entre une source lumineuse d'un véhicule frontal situé devant les projecteurs, dans le champ de la caméra, et l'horizon de ladite caméra. Ainsi, lorsque le véhicule frontal s'éloigne des lampes du véhicule, l'angle calculé augmente. A ce moment, la commande automatique ajuste le faisceau lumineux des lampes en relevant l'orientation verticale des lampes vers le haut, de sorte que les lampes éclairent plus loin.
Par contre, lorsque le véhicule frontal se rapproche des lampes du véhicule, l'angle calculé diminue. A ce moment, la commande automatique ajuste le faisceau lumineux des lampes en baissant l'orientation verticale des lampes vers le bas, de sorte que les lampes éclairent moins.
Un des problèmes de cet état de la technique est que lorsqu'un véhicule frontal se trouve sur une route surélevée par rapport au véhicule comprenant la caméra, le faisceau lumineux du véhicule n'éclaire que la côte, et non la route, la distance de visibilité est alors réduite. De plus, plus un véhicule frontal se rapprochera, moins les lampes vont éclairer l'environnement devant le véhicule puisqu'elles seront orientées de plus en plus bas, ce qui pose un problème d'éclairage pour le conducteur du véhicule comportant la caméra. On perd ainsi de la distance de visibilité. Par ailleurs, en pente descendante, lorsque c'est le véhicule comprenant la caméra qui se trouve sur une route surélevée par rapport à un véhicule frontal, le faisceau lumineux va être trop éblouissant pour le véhicule frontal.

**Objet de l'invention**

La présente invention a pour but de résoudre les problèmes cités ci-dessus et notamment d'optimiser la visibilité procurée par le faisceau lumineux des lampes du système d'éclairage du véhicule en prenant en compte la problématique d'éblouissement d'un usager d'un véhicule frontal quand ce véhicule est sur un même plan ou sur un plan différent du véhicule comportant les projecteurs et la caméra.
Selon un premier objet de l'invention, ce but est atteint par un procédé de commande automatique de lampes d'un système d'éclairage d'un véhicule automobile, les lampes étant aptes à émettre un faisceau lumineux pour éclairer une route, le véhicule comportant une caméra vidéo de champ déterminé pour acquérir une image d'un environnement du véhicule se trouvant dans le champ de la caméra, le procédé comportant les étapes de :

-    détecter la présence d'une paire de sources lumineuses à partir d'une image acquise par la caméra ;

-    calculer un angle projecteur qui est défini par un angle de site de la paire de sources lumineuses dans un référentiel véhicule situé au niveau des lampes du système d'éclairage du véhicule ; et

-    ajuster l'orientation du faisceau lumineux des lampes du système d'éclairage en fonction dudit angle projecteur,

ce procédé étant caractérisé en ce que l'angle projecteur est calculé à partir :

-    soit d'un angle caméra qui est défini par un angle de site de la paire de sources lumineuses dans un référentiel véhicule situé au niveau de la caméra,

- soit d'un angle au sol qui est défini par un angle de site de la paire de sources lumineuses dans un référentiel véhicule situé à l'aplomb de la caméra.

Un tel procédé présente l'avantage de permettre d'ajuster l'orientation du faisceau lumineux des projecteurs d'un véhicule en fonction d'un angle projecteur calculé par rapport à un référentiel véhicule passant par les projecteurs. Ainsi, grâce à cet angle projecteur, il est possible d'adapter l'éclairage en conséquence sans pour autant éblouir un usager d'un véhicule se situant en face du véhicule conducteur ou venant d'en face quand ce véhicule est sur un même plan ou sur un plan différent du véhicule comportant les projecteurs et la caméra, tout en garantissant une bonne distance de visibilité pour le conducteur du véhicule comportant la caméra.

Dans le cas où l'angle projecteur est calculé à partir d'un angle caméra qui est défini par un angle de site de la paire de sources lumineuses dans un référentiel véhicule situé au niveau de la caméra, ce calcul est simple à mettre en oeuvre.

Dans le cas où l'angle projecteur est calculé à partir d'un angle au sol qui est défini par un angle de site de la paire de sources lumineuses dans un référentiel véhicule situé à l'aplomb de la caméra, ce calcul est également simple à mettre en oeuvre. Ce calcul permet par la suite d'obtenir facilement la pente qui existe entre une première route sur laquelle se trouve le véhicule et une deuxième route sur laquelle se trouve un véhicule frontal.

Selon ce deuxième cas, dans une variante de réalisation non limitative, l'angle au sol est calculé à partir d'un calcul d'un angle d'inclinaison de la caméra. Le calcul de l'angle d'inclinaison est simple à effectuer.

Selon cette variante, le calcul de l'angle au sol s'effectue par un changement de repère par rotation à partir d'un repère de l'angle d'inclinaison de la caméra. Cela va permettre de considérer la somme de l'angle au sol et de l'angle d'inclinaison de la caméra comme un deuxième angle d'inclinaison de la caméra et d'utiliser la formule de l'angle d'inclinaison calculée précédemment. Il suffira pour cela de faire des projections dans le nouveau repère.

Dans un mode de réalisation non limitatif, le champ de la caméra est déterminé de manière à couvrir une plage d'éblouissement définie par le faisceau lumineux des lampes du système d'éclairage du véhicule.

Dans une variante de ce mode de réalisation non limitatif, le champ de la caméra est de 40° de large. Cela permet de couvrir la plage d'éblouissement.

Dans un mode de réalisation non limitatif, l'orientation du faisceau lumineux des lampes est ajustée au moyen d'un angle de commande fonction d'une distance entre le véhicule et la paire de sources lumineuses. Cela permet de garantir une bonne portée d'éclairage.

Dans un mode de réalisation non limitatif, l'orientation du faisceau lumineux des lampes est ajustée au moyen d'un angle de commande fonction de la nature de la paire de sources lumineuses. Cela permet d'ajouter une marge de sécurité supplémentaire pour garantir de ne pas éblouir un conducteur d'un véhicule frontal.

Dans un mode de réalisation non limitatif, lorsque la distance entre le véhicule et la paire de sources lumineuses est supérieure à une distance déterminée, le faisceau lumineux est ajusté avec un angle de commande supérieur à 1% en dessous de l'angle projecteur. Cela va permettre de relever le faisceau lumineux des lampes lorsqu'un véhicule frontal se trouve loin du véhicule comportant la caméra, et donc d'augmenter la distance de visibilité sans pour autant risquer d'éblouir un usager du véhicule frontal.

Selon une variante de ce mode, la distance déterminée est égale à trois cent mètres. Le véhicule frontal se situe alors à une distance assez lointaine de sorte qu'il n'est pas ébloui lorsque le faisceau lumineux est relevé.

Dans un mode de réalisation non limitatif, lorsque l'angle projecteur est nul, il n'y a aucun ajustement de l'orientation du faisceau lumineux des lampes. Ainsi, si un véhicule frontal se situe sur le même plan que le véhicule comportant la caméra, il reçoit toujours la même intensité lumineuse. Il n'y aucun risque d'éblouissement.

Selon un deuxième objet, l'invention concerne, un dispositif de commande automatique de lampes d'un système d'éclairage d'un véhicule automobile, les lampes étant aptes à émettre un faisceau lumineux pour éclairer une route, le véhicule comportant une caméra vidéo de champ déterminé pour acquérir une image d'un environnement du véhicule se trouvant dans le champ de la caméra, caractérisé en ce qu'il comporte :

- un dispositif de traitement d'images pour détecter une paire de sources lumineuses à partir d'une image acquise par la caméra ;
- une unité de contrôle pour :

  - calculer un angle projecteur qui est défini par un angle de site de la paire de sources lumineuses dans un référentiel véhicule situé au niveau des lampes du système d'éclairage du véhicule ; et
  - ajuster l'orientation du faisceau lumineux des lampes du système d'éclairage en fonction dudit angle projecteur.

Selon un troisième objet, l'invention concerne, un système d'éclairage d'un véhicule comprenant des lampes aptes à émettre un faisceau lumineux pour éclairer une route et un dispositif de commande automatique desdites lampes mettant en oeuvre le procédé de commande selon l'une des caractéristiques précédentes.

Selon un quatrième objet, l'invention concerne, un produit programme d'ordinateur comportant une ou plusieurs séquences d'instructions exécutables par une unité de traitement d'information, l'exécution desdites séquences d'instructions permettant une mise en oeuvre du procédé selon l'une quelconque des caractéristiques précédentes.

**Brève description des figures**

D'autres caractéristiques et avantages de la présente invention seront mieux compris à l'aide de la description et des dessins non limitatifs parmi lesquels :

- la Fig. 1 est un diagramme d'un mode de réalisation non limitatif du procédé de commande automatique selon l'invention ;

- la Fig. 2 est une représentation schématique de deux sources de lumière dans une image utilisée par le procédé de commande automatique de la Fig. 1 ;

- la Fig. 3 est une courbe représentative d'un écart entre les deux sources de lumière de la Fig. 2 en fonction d'une distance entre un premier véhicule et un deuxième véhicule, utilisée par le procédé de la Fig. 1 ;

- la Fig. 4 est un schéma représentant un premier véhicule, un deuxième véhicule sur des plans différents, et un angle projecteur entre le premier et deuxième véhicule, calculé par le procédé de commande de la Fig. 1 ;

- la Fig. 5 est un schéma représentant un premier véhicule, un deuxième véhicule sur des plans différents, et un angle caméra utilisé par le procédé de commande de la Fig. 1 pour le calcul d'un angle projecteur de la Fig. 4 ;

- la Fig. 6 est un schéma permettant d'expliquer un calcul d'un angle projecteur effectué par le procédé de la Fig. 1 selon un premier mode de réalisation non limitatif et utilisant un angle caméra illustré à la Fig. 5;

- la Fig. 7 est un schéma représentant un premier véhicule, un deuxième véhicule sur des plans différents, et un angle au sol utilisé par le procédé de commande de la Fig. 1 pour le calcul d'un angle projecteur de la Fig. 4 ;

- les Fig. 8, 9, 10 et 11 sont des schémas permettant d'expliquer un calcul d'un angle projecteur effectué par le procédé de la Fig. 1 selon un deuxième mode de réalisation non limitatif et utilisant un angle au sol illustré à la Fig. 7 ;

- la Fig. 12 est un premier schéma représentant un premier véhicule et un deuxième véhicule sur des plans différents, et montrant un ajustement de l'orientation des lampes du premier véhicule tel qu'effectué par le procédé de commande de la Fig. 1 ;

- la Fig. 13 est un deuxième schéma représentant un premier véhicule et un deuxième véhicule sur des plans différents, et montrant un ajustement de l'orientation des lampes du premier véhicule tel qu'effectué par le procédé de commande de la Fig. 1 ; et ;

- la Fig. 14 est une représentation schématique selon un mode de réalisation non limitatif d'un dispositif de mise en oeuvre du procédé de la Fig. 1.

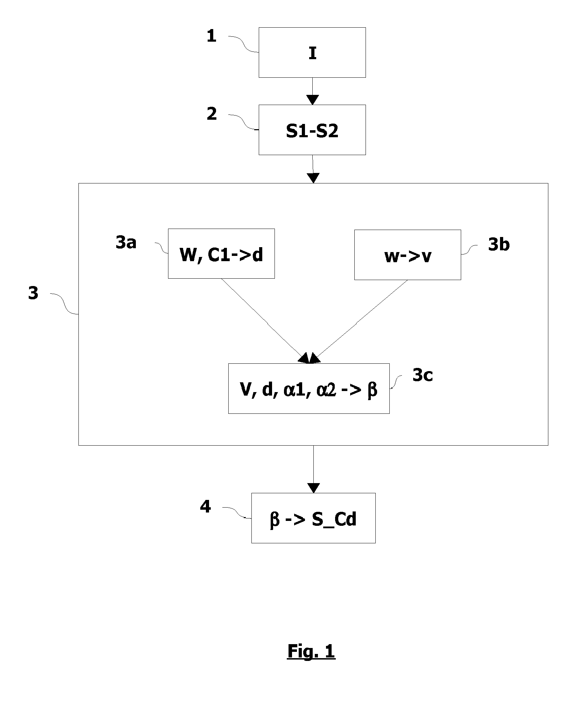

Le diagramme de la Fig. 1 représente le procédé de commande automatique de lampes d'un système d'éclairage SYS d'un véhicule automobile selon un mode de réalisation non limitatif de l'invention.
Comme on va le voir, le procédé de commande va permettre d'ajuster le faisceau lumineux des lampes P d'un véhicule VH1 et notamment les projecteurs (en actionnant le mouvement de ces projecteurs à la verticale) en fonction d'un angle projecteur calculé par rapport à un repère basé sur les projecteurs P dudit véhicule VH1 et ce lorsqu'un deuxième véhicule VH2 se trouve dans le champ de la caméra Cam du véhicule VH1. Un tel véhicule VH2, peut être un véhicule se trouvant sur la même route que le véhicule VH1 et donc se trouvant devant et roulant dans le même sens, ou être un véhicule roulant en sens opposé au véhicule VH1 venant en face sur la route opposée. Dans la suite de la description, un tel véhicule VH2 est appelé véhicule frontal, qu'il roule dans le même sens ou dans le sens opposé au véhicule VH1.
Le système d'éclairage SYS du véhicule VH1, qui est décrit plus en détail par la suite, comporte notamment :

- des lampes P, qui sont par exemple les projecteurs du véhicule, aptes à émettre un faisceau lumineux FX pour éclairer une route sur laquelle se trouve la véhicule VH1, et
- une caméra vidéo Cam de champ déterminé Ch.

Dans la suite de la description, on prend les projecteurs P en tant qu'exemple non limitatif de lampes du véhicule VH1.

Le procédé de commande automatique comporte les étapes suivantes.

**Dans une première étape 1)**, on acquiert une image I d'un environnement du véhicule VH1 se trouvant dans le champ Ch de la caméra Cam.

L'acquisition se fait au moyen d'une caméra Cam.

Dans un mode de réalisation non limitatif, elle permet d'acquérir des images de 640*480 pixels.

De plus, dans un mode de réalisation non limitatif, l'angle d'ouverture de la caméra Cam est défini de manière à couvrir la plage d'éblouissement du faisceau lumineux émis par les projecteurs P. Ainsi, par exemple, l'angle d'ouverture est de 40° en largeur.

En ce qui concerne l'angle d'ouverture vertical, on le prend à 30° par exemple. On a ainsi un pixel qui représente 30/480 = 0,0625° (à la tangente près en raison de la déformation due à la lentille de la caméra).

On notera que l'acquisition d'une image I de l'environnement du véhicule et notamment ici de l'environnement en face du véhicule se trouvant dans le champ de la caméra est bien connu de l'homme du métier et n'est donc pas décrit dans la description.

**Dans une deuxième étape 2)**, on détecte la présence d'une paire de sources lumineuses S1-S2 à partir de l'image I.

Une paire de sources lumineuses S1-S2 est caractérisée par le fait qu'elles appartiennent toutes les deux à même véhicule VH2 frontal. Cela peut être soit des projecteurs à l'avant, soit des feux à l'arrière du véhicule VH2 lorsque ce dernier se trouve respectivement sur la même route que le véhicule VH1, ou sur la route opposée.

Une telle détection est bien connue de l'homme du métier. Elle peut se baser par exemple sur des critères géométriques pour permettre un appariement entre différentes sources lumineuses. Ainsi, des critères tels que alignement vertical dans l'image I, taille similaire, écartement horizontal par rapport à une taille véhicule standard, similarités d'autres paramètres tels que (feux ou projecteurs)...etc peuvent être utilisés.

**Dans une troisième étape 3)**, on définit un angle projecteur β entre la paire de sources lumineuses S1-S2 et les lampes P du système d'éclairage SYS du véhicule.

Afin de définir cet angle β, les sous-étapes suivantes sont effectuées.

Dans une première sous-étape 3a), on détermine une distance d horizontale entre la caméra Cam du véhicule VH1 et le véhicule frontal VH2 comportant la paire de sources lumineuses S1-S2 déterminée précédemment.

Cette distance d est déterminée au moyen d'un écartement W défini entre les deux sources lumineuses S1 et S2 déterminées ci-dessus, et une courbe de rapport C1.

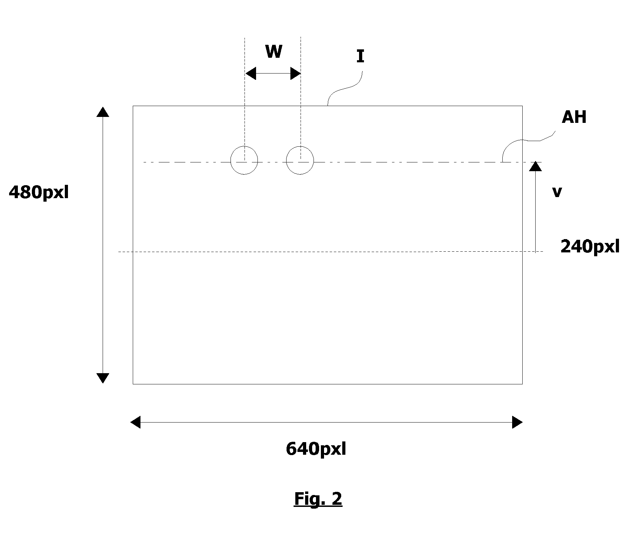

Ainsi, sur la Fig. 2 est représentée une image I acquise par la caméra Cam et dans laquelle une paire de sources lumineuses S1-S2 a été détectée. L'écartement W entre les deux sources S1 et S2 peut se lire directement sur l'image en pixels.

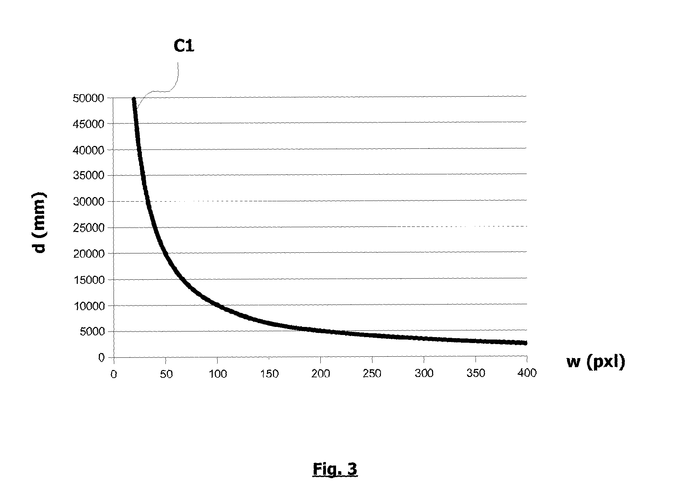

La Fig. 3 montre une courbe de rapport entre cet écart W (représenté sur l'axe des abscisses, en pixels) et la distance d (représentée sur l'axe des ordonnées, en mm) entre la caméra Cam et la paire de sources lumineuses S1-S2. Comme on peut le voir sur la Fig. 3, cette courbe C1 est une courbe de rapport 1/x à un coefficient multiplicatif CO près. Ce coefficient CO est défini de tel manière que la largeur du véhicule frontal VH2 divisé par la distance d entre ce véhicule VH2 et le véhicule VH1 soit égale au nombre de pixels de l'écart W fois la taille d'un pixel.

Dans un exemple non limitatif, on prend comme largeur typique du véhicule frontal VH2 une largeur de 1,6 mètres, et comme taille de pixel 8 microns.

Dans une deuxième sous-étape 3b), on détermine si les deux véhicules VH1 et VH2 sont sur un même plan ou non.

A cet effet, il suffit de regarder sur l'image I acquise par la caméra Cam telle qu'illustrée à la Fig. 2 le décalage v (« offset » en anglais) qui existe entre l'axe horizontal AH passant par la paire de sources lumineuses S1-S2 et le milieu de l'image qui se situe donc à 240 pixels dans l'exemple pris.

On notera que le milieu de l'image I définit dans un mode de réalisation non limitatif l'horizon de la caméra Cam.

Dans une variante de réalisation, si les sources lumineuses S1 et S2 ne sont pas alignées, on prend la moyenne de deux offsets v1 et v2 existant entre deux axes horizontaux AH1, AH2 passant respectivement par les deux sources lumineuses S1 et S2, et le milieu de l'image I.

Bien entendu, les deux premières sous-étapes 3a) et 3b) peuvent être effectuées en parallèle ou dans l'ordre inverse.

Dans une troisième sous-étape 3c), on calcule l'angle projecteur β à partir de la distance d et du décalage V calculées précédemment et soit d'un angle caméra, soit d'un angle au sol comme décrit en détail ci-après.

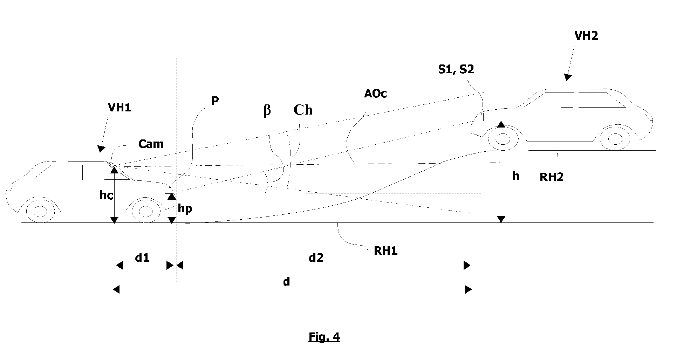

Cet angle projecteur β est représenté sur la Fig. 4.

Sur cette Fig. sont également représentés :

- le véhicule VH1 comportant la caméra Cam et les projecteurs P. La caméra Cam est à une hauteur hc du sol d'une première route RH1 sur laquelle se trouve le véhicule VH1, tandis que les projecteurs P se trouvent à une hauteur hp par rapport à ce même sol.
Par ailleurs la caméra Cam est définie par un champ Ch et un axe optique AOc.

- un véhicule frontal VH2 comportant la paire de sources lumineuses S1-S2. La paire S1-S2 est située à une hauteur h par rapport à la première route RH1. Le véhicule frontal VH2 se trouve sur une deuxième route RH2 ayant une pente par rapport à la route RH1 sur laquelle se trouve le véhicule VH1.

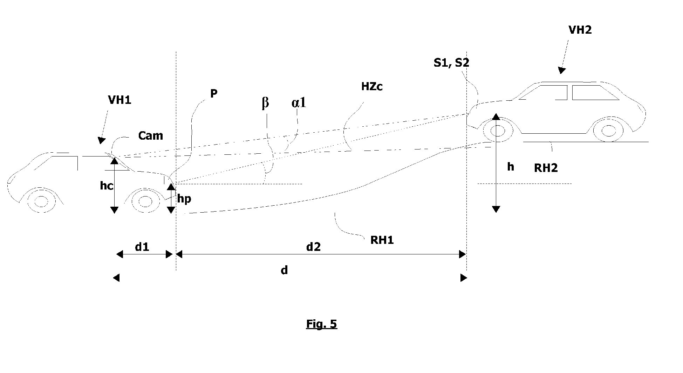

1) Dans un premier mode de réalisation non limitatif, l'angle projecteur β est calculé par rapport à un angle caméra α1. Cet angle caméra α1 est illustré sur la Fig. 5. Il est défini par l'angle de site de la paire de sources lumineuses S1-S2 dans un référentiel véhicule VH1 situé au niveau de la caméra Cam.
Comme le montre la Fig. 5, on a :

$$\tan(\alpha 1) = \frac{(h - hc)}{d}$$

et

$$\tan(\beta) = \frac{(h - hp)}{(d - d1)}$$

aux distorsions de l'objectif près.
avec :

- β l'angle projecteur défini par une droite reliant la paire de sources lumineuses S1-S2 et les projecteurs P, et par une droite horizontale dans le référentiel de la voiture passant par les projecteurs P du véhicule VH1 ;

- α1 l'angle caméra défini de façon pratique par la droite passant par la caméra Cam et la paire de sources lumineuses S1-S2, et l'horizontale, illustrée HZc, par rapport au référentiel véhicule VH1 et donc par rapport à la première route RH1 et reportée au niveau de la caméra Cam;

- hc, la hauteur de la caméra Cam par rapport au sol de la première route RH1 ;

- hp, la hauteur des projecteurs P par rapport au sol de la première route RH1 ;

- h la distance entre la paire de sources lumineuses S1-S2 et le sol de la première route RH1 ;

- d, la distance horizontale entre la caméra Cam et la paire de sources lumineuses S1-S2 ; et

- d1, la distance horizontale entre la caméra Cam et les projecteurs P.

On a obtient donc :

$$\tan(\beta) = \frac{(hc + d * \tan(\alpha 1) - hp)}{(d - d1)}$$

Soit

[ 1 ] :

$$\beta = \frac{(hc - hp + d * \alpha 1)}{(d - d1)}$$

avec tan$\alpha$1 approximé à $\alpha$1 car l'angle est petit, au maximum de 10% radian dans un exemple non limitatif.
On peut ainsi facilement passer de l'angle caméra $\alpha$1 à l'angle projecteur $\beta$ avec un calcul simple.
On notera que l'on peut également approximer la distance d-d1 à d pour simplifier.

Calcul de l'angle caméra $\alpha$1

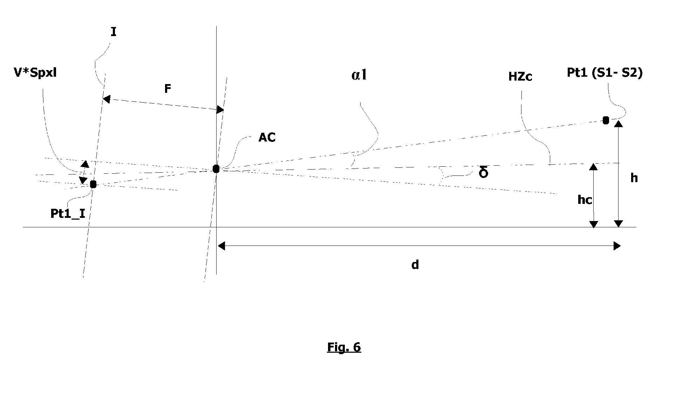

La Fig. 6 illustre une projection Pt1_I d'un premier point d'intérêt Pt1 dans l'image I, ce premier point d'intérêt correspondant ici à la paire de sources lumineuses S1-S2.
Comme indiqué sur la Fig. 6, on a :

$$\tan(\delta + \alpha 1) = \frac{(V * Spxl)}{F}$$

et

$$\tan(\alpha 1) = \frac{(h - hc)}{d}$$

avec :

- $\delta$ l'angle d'inclinaison de la caméra qui est fixe. Dans un exemple non limitatif, cet angle dépend de la longueur du capot véhicule VH1. En effet, il est défini de telle sorte que l'avant du véhicule soit visible dans l'image 1. De façon pratique, le capot du véhicule est visible au bas de l'image I.

- V, le décalage mesuré précédemment dans l'image I;

- Spxl, la taille d'un pixel dans l'image; et

- F, la distance focale entre le centre optique AC de la lentille de la caméra Cam et du foyer de l'image I.

On a alors :

$$\frac{(\tan(\delta) + \tan(\alpha 1))}{(1 - \tan(\delta) * \tan(\alpha 1))} = \frac{(\tan(\delta) + (\frac{(h - hc)}{d}))}{(1 - \tan(\delta) * (\frac{(h - hc)}{d}))}$$

Soit :

$$\tan(\delta) + \tan(\alpha 1) = (\frac{(V * Spxl)}{F}) * (1 - \tan(\delta) * \tan(\alpha 1))$$

Ce qui donne :

$$\tan(\alpha 1) * (1 + \tan(\delta) * (\frac{(V * Spxl)}{F})) = \frac{(V * Spxl)}{F} - \tan(\delta)$$

et

$$\tan(\alpha 1) = \frac{(\frac{(V * Spxl)}{F} - \tan(\delta))}{(1 + \tan(\delta) * (\frac{(V * Spxl)}{F}))} = \frac{(V * Spxl - F * \tan(\delta))}{(F + \tan(\delta) * V * Spxl)}$$

Soit :

$$[2]:$$

$$\tan(\alpha 1) = \frac{(V * Spxl - F * (\delta))}{(F + (\delta) * V * Spxl)}$$

On obtient ainsi l'angle caméra $\alpha 1$ par rapport à des valeurs connues ou calculées précédemment et de façon simple.

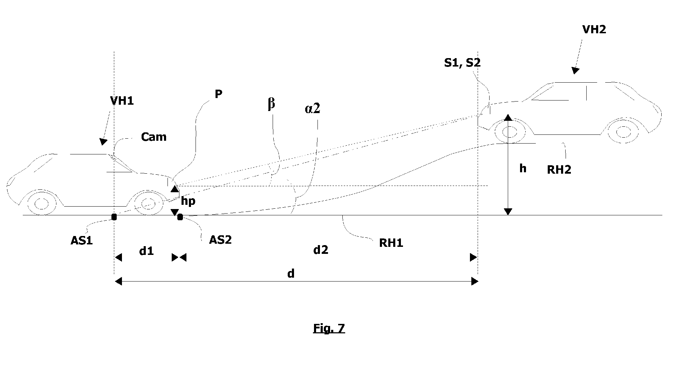

2) Dans un deuxième mode de réalisation non limitatif, l'angle projecteur $\beta$ est calculé par rapport à un angle au sol $\alpha 2$. Cet angle au sol $\alpha 2$ est illustré à la Fig. 7. Il est défini par l'angle de site de la paire de sources lumineuses S1-S2 dans un référentiel véhicule VH1 situé à l'aplomb de la caméra Cam.

Comme le montre la Fig. 7, on a :

$$\tan(\alpha 2) = \frac{h}{d}$$

et

$$\tan(\beta) = \frac{(h - hp)}{(d - d1)}$$

avec

- $\alpha 2$ l'angle au sol défini de façon pratique par la droite passant par la caméra Cam et la paire de sources lumineuses S1-S2, et un point AS1 passant par la première route RH1 et situé à l'aplomb de la caméra Cam, et le sol de la première route RH1.

On obtient donc :

$$\tan(\beta) = \frac{(d * \tan(\alpha 2) - hp)}{(d - d1)}$$

Soit :

[ 3 ] :

$$\beta = \frac{(d * \alpha 2 - hp)}{(d - d1)}$$

avec $\tan\alpha 2$ approximé à $\alpha 2$ car l'angle est petit, au maximum de 10%radian dans un exemple non limitatif.
On notera que l'on peut également approximer la distance d-d1 à d pour simplifier.
On peut ainsi facilement passer de l'angle au sol $\alpha 2$ à l'angle projecteur $\beta$.
L'intérêt de ce deuxième mode de réalisation est d'obtenir la pente existant entre les deux routes RH1 et RH2, grâce à cet angle au sol $\alpha 2$ soit la différence d'altitude existant entre la première route RH1 sur laquelle se trouve le véhicule VH1 et la deuxième route RH2 sur laquelle se trouve le véhicule frontal VH2.

Calcul de l'angle au sol $\alpha 2$

Le calcul de l'angle au sol s'effectue en utilisant l'angle d'inclinaison $\delta$ de la caméra.
Dans une première sous-étape, on détermine l'angle d'inclinaison $\delta$ en fonction notamment de caractéristiques relatives à une projection d'un point d'intérêt dans l'espace sur l'image I.

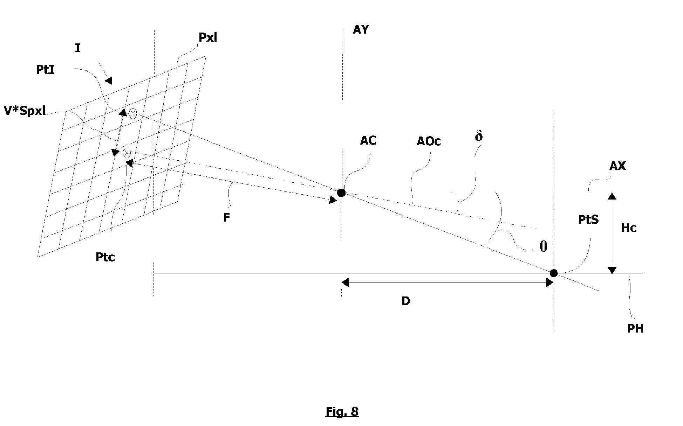

La Fig. 8 représente de manière générale la projection PtI d'un point d'intérêt Pt sur l'image I. Ce point d'intérêt définit un angle $\theta$ entre l'axe vertical AY passant par le centre optique AC de la lentille de la caméra Cam et une droite passant par le point d'intérêt Pts. Dans l'exemple pris, l'angle $\theta$ est négatif.

On notera que ce point d'intérêt PtS peut dans des exemples non limitatifs être le point correspondant à la paire de sources lumineuses S1-S2 ou encore un point de marquage au sol sur la route RH2 sur laquelle se trouve le véhicule frontal VH2 (qui permettra de calculer par la suite la pente de cette deuxième route RH2 par rapport à la première route RH1).

On remarquera par ailleurs que l'image I est représentée ici sous forme d'un tableau de pixels (qui est réduit pour plus de commodité).

Comme indiqué sur la Fig. 8, on a :

$$\tan(\theta) = \frac{-Hc}{D}$$

et

$$\tan((\theta) - (\delta)) = \frac{-(V * Spxl)}{F}$$

On obtient donc :

$$\frac{(\tan(\theta) - \tan(\delta))}{(1 + \tan(\delta) * \tan(\theta))} = \frac{-V * Spxl}{F}$$

Soit :

$$[4]$$

$$\tan(\delta) = \frac{(D * V * Spxl - F * Hc)}{(D * F + Hc * V * Spxl)}$$

avec :

- D, la distance entre le point de projection PtS et l'axe vertical AY,

- V, le nombre de pixels Pxl s'étendant entre le point de projection PtI et un point Ptc correspondant à la projection de l'angle d'inclinaison δ de la caméra sur l'image I.

- Spxl : la taille d'un pixel Pxl,

- F, la distance focale,

- Hc la hauteur de la caméra Cam par rapport à un plan horizontal PH (qui peut représenter le sol de la première route RH1) sur lequel se trouve le point d'intérêt PtS.

On obtient ainsi l'angle d'inclinaison δ de la caméra (qui correspond à l'angle entre l'axe optique de la caméra et l'axe horizontal AX) par rapport à des valeurs connues.

Dans une deuxième sous-étape, on calcule l'angle au sol α2 de la même manière que l'on a calculé l'angle d'inclinaison δ calculé ci-dessus.

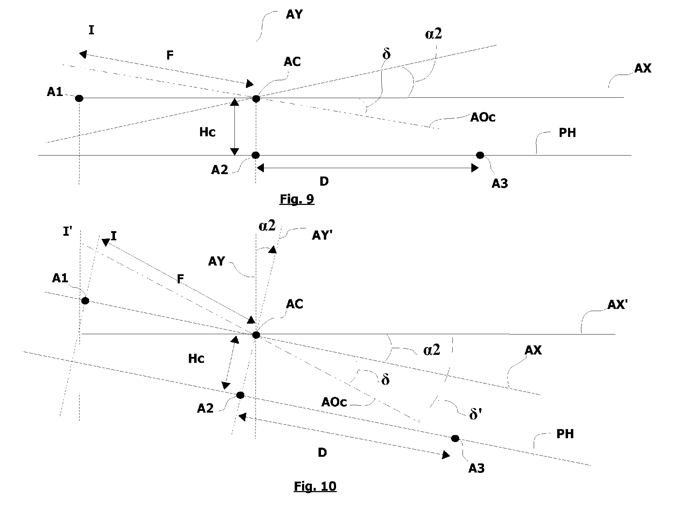

Les Fig. 9, 10 et 11 illustrent ce calcul.

A la Fig. 9 sont représentés l'angle d'inclinaison δ de la caméra tel que vu précédemment ainsi qu'un angle au sol α2 qui est dans cet exemple d'un signe opposé à l'angle d'inclinaison δ, soit ici positif. Nous sommes dans l'exemple où un véhicule VH1 est à une altitude plus basse qu'un véhicule frontal VH2 ; dans le cas opposé où c'est le véhicule frontal qui se situe à une altitude plus basse, les signes des angles sont les mêmes.

Un premier repère AX-AY considéré est défini par les axes vertical AX et horizontal AY par rapport à un plan PH horizontal. L'axe horizontal AX délimite l'angle d'inclinaison δ et est horizontal par rapport au plan PH. L'axe vertical AY passe par le centre optique AC de la caméra Cam.

Pour plus de commodités, l'angle au sol α2 a été rapporté au point AC représentant l'axe optique de la caméra.

Sont également représentées sur cette Fig. 9 :

- la hauteur Hc de la caméra par rapport au sol,
- la distance D entre la projection A3 d'un point d'intérêt PtS (non représenté) et le centre optique AC de la caméra, et
- la distance focale F.

La Figure 10 illustre les mêmes données que la Fig. 9 à savoir l'angle d'inclinaison δ de la caméra tel que vu précédemment ainsi qu'un angle au sol α2 mais dans un deuxième repère AX'-AY'.

Ce deuxième repère AX'-AY' considéré est déduit du premier repère AX-AY par une rotation de l'angle au sol α2, ici dans le sens des aiguilles d'une montre.

Pour plus de commodités, l'angle au sol α2 a été rapporté au point AC représentant par l'axe optique de la caméra.

Ce changement de repère va permettre de voir l'angle défini par la somme de l'angle d'inclinaison δ et de l'angle au sol α2 comme un deuxième angle d'inclinaison δ' de la caméra. Pour calculer cet angle δ' = δ+α2, et donc en déduire l'angle au sol α2 il suffira donc d'utiliser la formule [4] calculée ci-dessus pour l'angle d'inclinaison δ à des coefficients en cosinus près comme expliqué ci-après.

En raison du changement de repère effectué par rotation de l'angle au sol α2, toutes les distances calculées dans le premier repère AX-AY sont projetées dans le deuxième repère AX'-AY', ce qui donne des distances en cosinus de l'angle au sol α2.

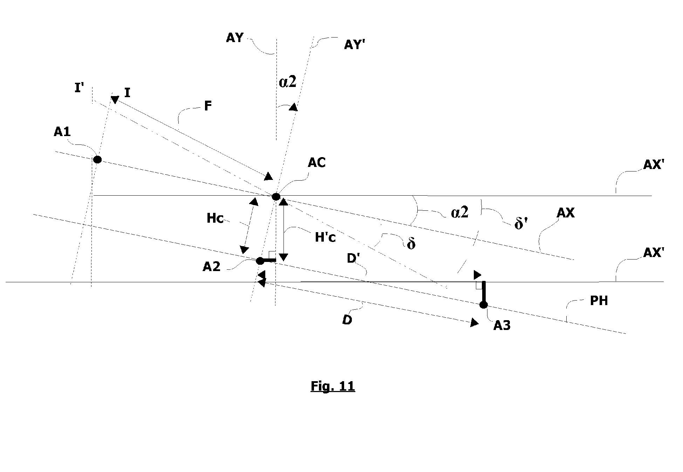

Ainsi, on obtient telles que représentées à la Fig. 11 :

- une hauteur H'c de la caméra qui est la projection de la hauteur Hc (définie dans l'ancien repère AX-AY par le segment AC-A2 sur la Fig.) sur le nouvel axe vertical AY', soit :

$$H'c = Hc * \cos \alpha2$$

- une distance D' qui est la projection de la distance D (défini dans l'ancien repère AX-AY par le segment A2-A3 sur la Fig.) sur le nouvel axe horizontal AX', soit :

$$D' = D/\cos \alpha2,$$

et
- la distance focale F.

Ainsi, dans la formule [4] calculée pour l'angle d'inclinaison δ précédente, on a pour l'angle d'inclinaison δ' :

$$\tan(\delta') = \frac{(D' * V * Spxl - F * Hc')}{(D' * F' + Hc' * V * Spxl)}$$

avec :

- $\delta'$ par $\delta + \alpha 2$,
- $D' = D/\cos\alpha 2$,
- $Hc' = Hc*\cos\alpha 2$, et
- $F$, la distance focale

On obtient :

$$\tan(\delta + \alpha 2) = \left( \frac{\frac{D}{(\cos\alpha 2)} * (V * Spxl - F * Hc * \cos(\alpha 2)))}{\left(\frac{(D*F)}{(\cos(\alpha 2))} + Hc * \cos(\alpha 2) * V * Spxl\right)} \right)$$

Soit

$$\tan(\delta + \alpha 2) = \frac{((D * V * Spxl - F * Hc * \cos^2(\alpha 2)))}{((D * F) + Hc * \cos^2(\alpha 2) * V * Spxl)}$$

et en approximant car l'angle au sol $\alpha 2$ étant relativement assez petit (entre -10%radian et +10% radian dans un exemple non limitatif) :

$$[5] :$$

$$\alpha 2 = \left( \frac{(D * V * Spxl - F * Hc)}{(D * F + Hc * V * Spxl)} \right) - \delta$$

On obtient ainsi l'angle au sol $\alpha 2$ à partir de l'angle d'inclinaison $\delta$ et de valeurs connues ou calculées précédemment pour un point d'intérêt déterminé. Pour le point d'intérêt déterminé correspondant à la paire de sources lumineuses S1-S2, on a D = d, V = v, Hc = hc et PH correspondant à la première route RH1.

En conclusion, grâce au premier mode (calcul à partir de l'angle caméra) ou deuxième mode (calcul à partir de l'angle au sol) de réalisation non limitatifs on obtient ainsi un angle projecteur $\beta$ en ayant pris comme repère un repère véhicule passant par les projecteurs P du véhicule VH1.

**Dans une quatrième étape 4)**, on ajuste l'orientation du faisceau lumineux des projecteurs P du système d'éclairage P en fonction dudit angle projecteur $\beta$ calculé au moyen d'un signal de commande S_Cd envoyé au projecteurs P.

Lorsque les deux véhicules VH1 et VH2 sont sur un même plan, l'angle projecteur β est égal à 0 et il n'y a aucun ajustement de l'orientation du faisceau lumineux des projecteurs P. Ainsi, quand un véhicule frontal VH2 se rapproche, on ne baisse pas le faisceau lumineux ce qui permet de conserver une distance de visibilité constante contrairement à l'art antérieur dans lequel les projecteurs sont abaissés dans ce cas.

Lorsque les deux véhicules VH1 et VH2 sont sur un plan différent, comme dans l'exemple non limitatif de la Fig. 5 l'angle projecteur β est différent de 0 et un ajustement de l'orientation du faisceau lumineux des projecteurs P est effectué.

Ainsi, lorsqu'un véhicule frontal VH2 se trouve à une hauteur plus élevée que le véhicule VH1, le véhicule VH1 étant donc en début d'une montée, l'angle projecteur β est positif et l'ajustement est effectué de manière à ce que le faisceau lumineux des projecteurs P éclairent plus haut. Un signal de commande S_Cd est envoyé et les projecteurs P subissent un mouvement vertical vers le haut. On ne perd ainsi pas de la distance de visibilité en montée.

Par contre, lorsqu'un véhicule frontal VH2 se trouve à une hauteur plus basse que le véhicule VH1, le véhicule VH1 étant donc en début d'une descente, l'angle projecteur β est négatif et l'ajustement est effectué de manière à ce que le faisceau lumineux des projecteurs P éclairent moins haut. Un signal de commande S_Cd est envoyé et les projecteurs P subissent un mouvement vertical vers le bas. On ne risque ainsi pas d'éblouir les usagers du (des) véhicule(s) frontal VH2.

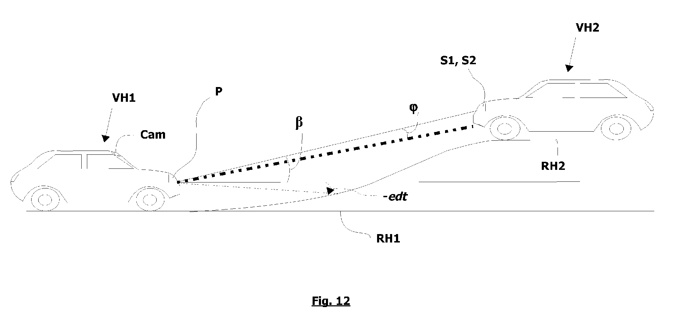

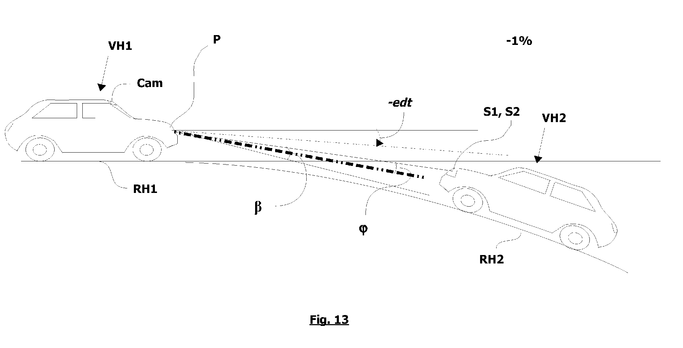

L'orientation des projecteurs P est ajustée en fonction d'un angle de commande φ comme illustré sur les Fig. 12 et 13.

Dans un premier mode de réalisation non limitatif, l'angle de commande φ peut être défini de manière à placer le haut du faisceau lumineux des projecteurs P à une première valeur déterminée dans une plage. Par exemple à une valeur entre 1 % et 1,5%.

Dans un deuxième mode de réalisation non limitatif, suivant la portée d'éclairage que l'on veut garantir, l'angle de commande φ peut varier en fonction de la distance entre le véhicule VH1 et la paire de sources lumineuses S1-S2. Cette distance peut être la distance d décrite précédemment (entre la caméra et la paire de sources lumineuses) ou encore une distance d2 entre l'avant du véhicule VH1 et la paire de sources lumineuses S1-S2. Ainsi, lorsque cette distance est supérieure à une distance déterminée DA, le faisceau lumineux peut être ajusté avec un angle de commande inférieur à 1% en dessous de l'angle projecteur β. Dans un exemple non limitatif, cette distance déterminée DA est égale à 300m. Ainsi, pour une portée de 1m à 300m, l'angle de commande φ peut être de 1% en dessous de l'angle projecteur β et haut delà de 300m, l'angle peut être de 0,5% en dessous de l'angle projecteur β.

Dans un troisième mode de réalisation (qui peut être combiné aux deux modes précédents), la valeur de l'angle de commande φ peut être également fonction de la nature de la paire de sources lumineuses S1-S2.

Dans le cas où les sources lumineuses S1-S2 sont des projecteurs (le véhicule frontal VH2 est un véhicule provenant de la voie d'à côté et est donc un véhicule VH2 que le véhicule VH1 croise), l'angle de commande φ peut diminuer en fonction de sa valeur standard appliquée décrit ci-dessus. Par exemple, si nous sommes dans le cas de 1%, on peut appliquer 0,8% en dessous de l'angle projecteur β. En effet, les projecteurs sont situés à une distance verticale bien en dessous de la tête d'un conducteur et donc de sa vision. Si on relève un peu le faisceau lumineux, il n'y a pas de risque d'éblouissement du conducteur du véhicule frontal VH2.

Au contraire, dans le cas où les sources lumineuses S1-S2 sont des feux arrière (le véhicule frontal VH2 est un véhicule se situant sur la même voie et est donc un véhicule VH2 que le véhicule VH1 suit), l'angle de commande φ peut augmenter en fonction de sa valeur standard appliquée décrit ci-dessus. Par exemple, si nous sommes dans le cas de 1%, on peut appliquer 1,2% en dessous de l'angle projecteur β. En effet, pour certains véhicules, les feux arrières peuvent être situés à peut près au même niveau que la tête d'un conducteur et donc de sa vision. Si on rabaisse un peu le faisceau lumineux, cela permet d'avoir une marge de sécurité supplémentaire quant au risque d'éblouissement du conducteur du véhicule frontal VH2.

Ainsi, comme on peut le voir sur les Fig. 12 et 13, que ce soit en pente montante (Fig. 12) ou en pente descendante (Fig. 13), il n'y a aucun risque d'éblouissement ou de réduction de la distance de visibilité contrairement à un pourcentage d'ajustement de l'art antérieur indiqué edt sur ces Fig. et dont le haut du faisceau lumineux indiqué en pointillés non gras dans un cas (Fig. 12) bute sur la pente en montée et donc réduit la distance de visibilité et qui dans l'autre cas (Fig. 13) éblouit trop le conducteur du véhicule frontal VH2.

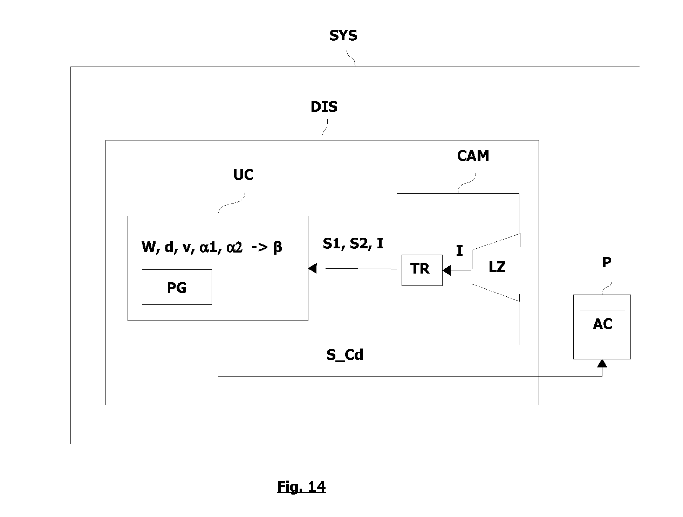

Le procédé de l'invention est mis en oeuvre par un dispositif DISP de commande automatique de projecteurs P d'un système d'éclairage SYS d'un véhicule automobile VH1 représenté à la Fig. 14.

Ce dispositif comporte :

- la caméra vidéo Cam permettant d'acquérir l'image I. Elle est par exemple du type VGA de définition 640*480 et comporte une lentille Lz à cet effet. Elle comporte également un dispositif de traitement d'images TR pour détecter une paire de sources lumineuses S1-S2 à partir de l'image I.

- une unité de contrôle UC pour définir :

- l'angle projecteur β qui est défini par un angle de site de la paire de sources lumineuses S1-S2 dans un référentiel véhicule VH1 situé au niveau des projecteurs P du système d'éclairage SYS du véhicule VH1;

- pour ajuster l'orientation du faisceau lumineux desdits projecteurs P en fonction dudit angle projecteur β ; et

- pour envoyer un signal de commande S_Cd à un actionneur mécanique AC des projecteurs P. Un tel actionneur AC est connu de l'homme du métier et n'est donc pas décrit ici.

L'unité de contrôle UC permet notamment de calculer l'écartement W entre les deux sources lumineuses S1-S2, le décalage v et la distance d entre la caméra Cam et l'avant du véhicule frontal VH2 tel que vu précédemment.

On notera que la mise en oeuvre du procédé de commande exposé ci-dessus peut être effectuée au moyen d'un dispositif micro-programmé, ou même d'une logique câblée de type ASIC.

Ainsi, le dispositif de commande DISP peut comporter un produit programme d'ordinateur PG comportant une ou plusieurs séquences d'instructions exécutables par une unité de traitement d'information telle que microprocesseur, microcontrôleur, ordinateur et/ou machine d'état, l'exécution desdites séquences d'instructions permettant une mise en oeuvre du procédé décrit.

Un tel programme d'ordinateur PG peut être inscrit en mémoire non volatile inscriptible de type ROM ou en mémoire non volatile ré-inscriptible de type EEPROM. Ledit programme d'ordinateur PG peut être inscrit en mémoire en usine ou encore téléchargé en mémoire. Les séquences d'instructions peuvent être des séquences d'instructions machine, ou encore des séquences d'un langage de commande interprétées par le CPU au moment de leur exécution.

Dans l'exemple de la Fig. 14, le programme d'ordinateur PG est inscrit dans une mémoire de l'unité de contrôle UC. Bien entendu, au lieu d'un seul programme PG, on pourrait également avoir deux programmes différents pour effectuer d'une part le traitement d'image par le dispositif de traitement d'image TR et d'autre part effectuer les étapes de l'unité de contrôle UC.

Ainsi, le procédé selon l'invention présente les avantages suivants :

- il permet d'anticiper les variations verticales de la route, que le véhicule VH1 se trouve en début de montée, ou en début de descente, ce qui garantit une bonne distance d'éclairage quelque soient les variations verticales de la route; et

- il permet d'adapter l'ajustement du faisceau lumineux à une valeur déterminée en fonction de l'angle projecteur et donc en prenant en compte non seulement la distance entre le véhicule comportant la caméra et un véhicule frontal mais également la pente existant entre le véhicule VH1 et un véhicule frontal VH2.

## Revendications

1. Procédé de commande automatique de lampes (P) d'un système d'éclairage (SYS) d'un véhicule automobile (VH1), les lampes (P) étant aptes à émettre un faisceau lumineux pour éclairer une route, le véhicule comportant une caméra vidéo (Cam) de champ déterminé (Ch) pour acquérir une image (I) d'un environnement du véhicule (VH1) se trouvant dans le champ de la caméra (Cam), comportant les étapes consistant à :

   - détecter la présence d'une paire de sources lumineuses (S1-S2) à partir d'une image (I) acquise par la caméra (Cam);
   - calculer un angle projecteur (β) qui est défini par un angle de site de la paire de sources lumineuses (S1-S2) dans un référentiel véhicule (VH1) situé au niveau des lampes (P) du système d'éclairage (SYS) du véhicule (VH1) ; et
   - ajuster l'orientation du faisceau lumineux des lampes (P) du système d'éclairage (P) en fonction dudit angle projecteur (β),

   **caractérisé en ce que** l'angle projecteur (β) est calculé à partir :

   - soit d'un angle caméra (α1) qui est défini par un angle de site de la paire de sources lumineuses (S1-S2) dans un référentiel véhicule (VH1) situé au niveau de la caméra (Cam),
   - soit d'un angle au sol (α2) qui est défini par un angle de site de la paire de sources lumineuses (S1-S2) dans un référentiel véhicule (VH1) situé à l'aplomb de la caméra (Cam).

2. Procédé de commande selon la revendication précédente, dans lequel, l'angle au sol (α2) est calculé à partir d'un calcul d'un angle d'inclinaison (δ) de la caméra (Cam).

3.  Procédé de commande selon l'une des revendications précédentes, dans lequel le calcul de l'angle au sol s'effectue par un changement de repère par rotation à partir d'un repère (AX-AY) de l'angle d'inclinaison (δ) de la caméra (Cam).

4.  Procédé de commande selon l'une des revendications précédentes, dans lequel le champ de la caméra est déterminé de manière à couvrir une plage d'éblouissement définie par le faisceau lumineux des lampes (P) du système d'éclairage (SYS) du véhicule.

5.  Procédé de commande selon la revendication précédente, dans lequel le champ de la caméra est de 40° de large.

6.  Procédé de commande selon l'une des revendications précédentes, dans lequel l'orientation du faisceau lumineux des lampes est ajusté au moyen d'un angle de commande (φ) fonction d'une distance (d, d2) entre le véhicule et la paire de sources lumineuses (S1-S2).

7.  Procédé de commande selon l'une des revendications précédentes, dans lequel l'orientation du faisceau lumineux des lampes est ajusté au moyen d'un angle de commande (φ) fonction de la nature de la paire de sources lumineuses (S1-S2).

8.  Procédé de commande selon l'une quelconque des revendications précédentes, dans lequel lorsque une distance (d) entre le véhicule (CH1) et la paire de sources lumineuses (S1-S2) est supérieure à une distance déterminée (DA), le faisceau lumineux est ajusté avec un angle de commande (φ) supérieur à 1% en dessous de l'angle projecteur (β).

9.  Procédé de commande selon la revendication précédente, dans lequel la distance déterminée (DA) est égale à trois cent mètres.

10. Procédé de commande selon l'une des revendications précédentes 1 à 5, dans lequel lorsque l'angle projecteur (β) est nul, il n'y a aucun ajustement de l'orientation du faisceau lumineux des lampes (P).

11. Dispositif de commande automatique de lampes (P) d'un système d'éclairage (SYS) d'un véhicule automobile (VH1), les lampes (P) étant aptes à émettre un faisceau lumineux pour éclairer une route, le véhicule comportant une caméra vidéo (Cam) de champ déterminé (CH) pour acquérir une image (I) d'un environnement du véhicule (VH1) se trouvant dans le champ de la caméra (Cam), **caractérisé en ce qu'**il comporte :

    - un dispositif de traitement d'images (TR) pour détecter une paire de sources lumineuses (S1-S2) à partir d'une image (I) acquise par la caméra (Cam) ;
    - une unité de contrôle (UC) pour calculer un angle projecteur (β) qui est défini par un angle de site de la paire de sources lumineuses (S1-S2) dans un référentiel véhicule (VH1) situé au niveau des lampes (P) du système d'éclairage (SYS) du véhicule (VH1), l'angle projecteur (β) étant calculé à partir :

        - soit d'un angle caméra (α1) qui est défini par un angle de site de la paire de sources lumineuses (S1-S2) dans un référentiel véhicule (VH1) situé au niveau de la caméra (Cam),
        - soit d'un angle au sol (α2) qui est défini par un angle de site de la paire de sources lumineuses (S1-S2) dans un référentiel véhicule (VH1) situé à l'aplomb de la caméra (Cam), et

    - un dispositif d'ajustement de l'orientation du faisceau lumineux des lampes (P) du système d'éclairage (SYS) en fonction dudit angle projecteur (β).

12. Système d'éclairage (SYS) d'un véhicule automobile comprenant des lampes (P) aptes à émettre un faisceau lumineux pour éclairer une route et un dispositif de commande (DISP) automatique desdites lampes mettant en oeuvre le procédé de commande selon l'une des revendications précédentes 1 à 10.

13. Produit programme d'ordinateur (PG) comportant une ou plusieurs séquences d'instructions exécutables par une unité de traitement d'information, l'exécution desdites séquences d'instructions permettant une mise en oeuvre du procédé selon l'une quelconque des revendications précédentes 1 à 10.

**1**   I

**2**   S1-S2

**3**

**3a**   W, C1->d

**3b**   w->v

**3c**   V, d, $\alpha$1, $\alpha$2 -> $\beta$

**4**   $\beta$ -> S_Cd

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

VH2

S1, S2

VH1

P

φ

Cam

β

RH2

-edt

RH1

**Fig. 12**

**Fig. 13**

**SYS**

**DIS**

**CAM**

**UC**

W, d, v, α1, α2 -> β

**PG**

S1, S2, I

**TR**

I

**LZ**

**P**

**AC**

S_Cd

**Fig. 14**

**Office européen des brevets**

**RAPPORT DE RECHERCHE EUROPEENNE**

Numéro de la demande

EP 08 15 5157

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JP 07 052706 A (TOYOTA MOTOR CORP) 28 février 1995 (1995-02-28) * abrégé * | 1,4,5, 11-13 | INV. B60Q1/08 |
| Y | * figures 1-13 * | 6-10 | |
| | ----- | | |
| D,X | US 2004/052083 A1 (DAICHO YOSHINAO [JP] ET AL) 18 mars 2004 (2004-03-18) * figures 1-15 * | 1,4-6,8, 9,11-13 | |
| A | * alinéas [0056] - [0064] * | 3,4 | |
| | ----- | | |
| X | WO 03/053737 A (GENTEX CORP [US]) 3 juillet 2003 (2003-07-03) * figures 1-4 * * alinéas [0050], [0055] - [0058] * * revendications 1,3-5,8,32,53 * | 1,4-6, 11-13 | |
| | ----- | | |
| Y | EP 1 757 485 A (PORSCHE AG [DE]) 28 février 2007 (2007-02-28) | 6-10 | |
| A | * alinéas [0014] - [0017], [0020] - [0026]; revendications 1-4 * | 1,11-13 | |
| | ----- | | **DOMAINES TECHNIQUES RECHERCHES (IPC)** |
| A | EP 1 491 402 A (HITACHI LTD [JP]; HONDA MOTOR CO LTD [JP]) 29 décembre 2004 (2004-12-29) * alinéa [0046]; figures 2,3,5 * | 1-3, 11-13 | B60Q H04N |
| | ----- | | |
| A | EP 1 513 103 A (HITACHI LTD [JP]) 9 mars 2005 (2005-03-09) * abrégé; figures 1,5,16,17 * | 1,11-13 | |
| | ----- | | |
| A | EP 0 869 031 A (BOSCH GMBH ROBERT [DE]) 7 octobre 1998 (1998-10-07) * revendications 1,2,4,6,9 * * colonne 5; figures 1-3 * | 1,11-13 | |
| | ----- | | |

Le présent rapport a été établi pour toutes les revendications

| Lieu de la recherche | Date d'achèvement de la recherche | Examinateur |
|---|---|---|
| Munich | 31 juillet 2008 | Giraud, Pierre |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 15 5157

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-07-2008

| Document brevet cité au rapport de recherche | | Date de publication | Membre(s) de la famille de brevet(s) | | Date de publication |
|---|---|---|---|---|---|
| JP 7052706 | A | 28-02-1995 | JP | 2861744 B2 | 24-02-1999 |
| US 2004052083 | A1 | 18-03-2004 | JP | 2004098970 A | 02-04-2004 |
| WO 03053737 | A | 03-07-2003 | AU | 2002351338 A1 | 09-07-2003 |
| | | | CA | 2465782 A1 | 03-07-2003 |
| | | | CN | 1602260 A | 30-03-2005 |
| | | | EP | 1451038 A1 | 01-09-2004 |
| | | | JP | 2005512875 T | 12-05-2005 |
| | | | MX | PA04005569 A | 06-12-2004 |
| EP 1757485 | A | 28-02-2007 | DE | 102006016073 A1 | 22-03-2007 |
| | | | US | 2007047244 A1 | 01-03-2007 |
| EP 1491402 | A | 29-12-2004 | JP | 2005014748 A | 20-01-2005 |
| | | | US | 2005036325 A1 | 17-02-2005 |
| EP 1513103 | A | 09-03-2005 | JP | 2005092857 A | 07-04-2005 |
| | | | US | 2005036660 A1 | 17-02-2005 |
| EP 0869031 | A | 07-10-1998 | AT | 242136 T | 15-06-2003 |
| | | | DE | 19713884 A1 | 08-10-1998 |
| | | | ES | 2201352 T3 | 16-03-2004 |
| | | | JP | 10278670 A | 20-10-1998 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6960005 B